# EUROPEAN PATENT APPLICATION

(11) **EP 4 593 225 A1**
(43) Date of publication of application: **30.07.2025**
(21) Application number: 25153568.8
(22) Date of filing: 23.01.2025
(51) Int. Cl.: H02J 1/08, B60L 53/14, B60L 53/60, H02J 7/00, B60L 3/00, B60L 53/10, B60L 53/18, B60L 53/302, B60L 53/31, H01H 50/04, H01H 50/14, H01H 50/02, H01H 1/58

(54) **POWER DISTRIBUTION APPARATUS AND CHARGING PILE**

(30) Priority: 23.01.2024 CN 202410097968
(71) Applicant: Huawei Digital Power Technologies Co., Ltd., Shenzhen, Guangdong 518043 (CN)
(72) Inventor: WANG, Qiao, Shenzhen, Guangdong 518043 (CN); PAN, Denghai, Shenzhen, Guangdong 518043 (CN); YANG, Zezhou, Shenzhen, Guangdong 518043 (CN); WANG, Yuchuan, Shenzhen, Guangdong 518043 (CN); LIU, Yuxiu, Shenzhen, Guangdong 518043 (CN); TAO, Wei, Shenzhen, Guangdong 518043 (CN)
(74) Representative: Maiwald GmbH

(57) **Abstract**

Embodiments of this application provide a power distribution apparatus and a charging pile. The power distribution apparatus includes a plurality of relays and a PCB. The relay includes an input lead-out pin and an output lead-out pin. A top surface or the inside of the PCB includes a plurality of groups of current input paths. A bottom surface of the PCB includes a plurality of groups of current output paths. The current input path is configured to receive a current, and the current output path is configured to output a current. The input lead-out pin of the relay is connected to the current input path, and the output lead-out pin of the relay is connected to the current output path.

## Description

### TECHNICAL FIELD

This application relates to the field of new energy technologies, and in particular, to a power distribution apparatus and a charging pile.

### BACKGROUND

A power distribution apparatus is connected between a power module and a charging interface in a charging pile, to distribute, to the charging interface, a current that is output by the power module, so that utilization of the power module can be improved, and diversified charging requirements of electric vehicles can be met. With an increase in a charging power of the electric vehicles, how to improve a through-current density of the power distribution apparatus and reduce a size of the power distribution apparatus becomes one of important evolution directions of the power distribution apparatus.

### SUMMARY

Embodiments of this application provide a power distribution apparatus and a charging pile. The power distribution apparatus has a strong through-current capability, a small size, and high flexibility in power distribution.

According to a first aspect, an embodiment of this application provides a power distribution apparatus. The power distribution apparatus includes a printed circuit board PCB and a plurality of relays. The PCB includes a top surface and a bottom surface that are disposed opposite to each other. The top surface of the PCB or the inside of the PCB includes a plurality of groups of current input paths. The bottom surface of the PCB includes a plurality of groups of current output paths. Each group of current input paths is configured to receive a current, and each group of current output paths is configured to output a current. Each group of current input paths includes two current input paths: a positive current input path and a negative current input path. Each group of current output paths includes two current output paths: a positive current output path and a negative current output path. Each of the plurality of relays includes a main lead-out pin component located outside the relay. The main lead-out pin component includes an input lead-out pin and an output lead-out pin. The input lead-out pin is connected to one of a group of current input paths, and the output lead-out pin is connected to one of a group of current output paths. The main lead-out pin component is configured to: connect or disconnect a current transmission path between the current input path and the current output path. Output lead-out pins of at least two of the plurality of relays are connected to a same group of current output paths, and input lead-out pins of the at least two relays are connected to at least two groups of current input paths in one-to-one correspondence.

The current output paths are disposed on the bottom surface of the PCB, so that an area of the PCB can be fully used. These current output paths may collect currents of at least two groups of current input paths, and output a collected current to an electric vehicle. In this way, a through-current density of the power distribution apparatus can be improved, and a size of the power distribution apparatus can be reduced. In addition, assembly of the relay and the PCB is simple, and a power distribution function can be implemented without using a large quantity of external cables, so that manufacturability and maintainability of the power distribution apparatus are good.

In a possible implementation, a via is further included between the top surface of the PCB and the bottom surface of the PCB, and the main lead-out pin component of each relay is connected to each current input path and each current output path through the via. The plurality of groups of current output paths include a plurality of groups of copper bars or a plurality of groups of aluminum bars, and a length of each input lead-out pin is less than a length of each output lead-out pin.

The copper bar or the aluminum bar has a strong through-current capability, so that a through-current capability of the power distribution apparatus can be improved. Because the copper bar or the aluminum bar has a specific thickness, to facilitate the output lead-out pin to pass through the via and be welded to the copper bar or the aluminum bar, the output lead-out pin may be set to be longer in length.

In a possible implementation, each relay includes two groups of main lead-out pin components, and the two groups of main lead-out pin components are connected between one group of current input paths and one group of current output paths. Input lead-out pins of one group of main lead-out pin components are connected to a positive current input path of the one group of current input paths through the via, and output lead-out pins of the one group of main lead-out pin components are connected to a positive current output path of the one group of current output paths through the via. Input lead-out pins of the other group of main lead-out pin components are connected to a negative current input path of the one group of current input paths through the via, and output lead-out pins of the other group of main lead-out pin components are connected to a negative current output path of the one group of current output paths through the via.

Compared with a solution in which one relay is connected between the positive current input path and the positive current output path, and one relay is connected between the negative current input path and the negative current output path, in this implementation, one relay integrates two groups of main lead-out pin components, so that an area that is of the PCB and that is occupied by the relay can be reduced, and the size of the power distribution apparatus can be reduced.

In a possible implementation, the PCB includes a plurality of groups of input terminals and a plurality of groups of output terminals. The plurality of groups of input terminals are connected to the plurality of groups of current input paths in one-to-one correspondence. The plurality of groups of output terminals are connected to the plurality of groups of current output paths in one-to-one correspondence. Each group of current input paths is configured to receive the current by using a corresponding group of input terminals, and each group of current output paths is configured to output the current by using a corresponding group of output terminals. The PCB includes a first edge and a second edge that are disposed opposite to each other, and a third edge and a fourth edge that are disposed opposite to each other. The plurality of groups of input terminals are arranged along at least one of the first edge and the second edge, and the plurality of groups of current input paths extend in a direction from the first edge to the second edge.

In a possible implementation, the plurality of groups of output terminals are arranged along at least one of the third edge and the fourth edge, and the plurality of groups of current output paths extend in a direction from the third edge to the fourth edge.

In other words, in a direction from the top surface of the PCB to the bottom surface of the PCB, projections of the plurality of groups of current input paths and projections of the plurality of groups of current output paths are cross-distributed in rows and columns. In this way, wiring of the PCB can be normalized, so that a size of the PCB can be reduced, and the size of the power distribution apparatus can be reduced.

In a possible implementation, the relay includes a bottom wall, the bottom wall is in a quadrilateral shape, the two groups of main lead-out pin components are located on the bottom wall, and the input lead-out pins and the output lead-out pins of the two groups of main lead-out pin components are arranged at intervals in a circumferential direction of the bottom wall. Projections of the two input lead-out pins of the two groups of main lead-out pin components do not overlap in the direction from the first edge to the second edge.

When the projections of the two input lead-out pins of the two groups of main lead-out pin components do not overlap in the direction in which the current input paths extend, the plurality of current input paths on the PCB may be parallel to each other and disposed independently, thereby facilitating the normalized wiring of the PCB, and reducing the size of the PCB.

In a possible implementation, projections of the two output lead-out pins of the two groups of main lead-out pin components do not overlap in the direction from the third edge to the fourth edge.

When the projections of the two output lead-out pins of the two groups of main lead-out pin components do not overlap in the direction in which the current output paths extend, the plurality of current output paths on the PCB may be parallel to each other and disposed independently, thereby facilitating the normalized wiring of the PCB, and reducing the size of the PCB.

In a possible implementation, the relay includes at least one protrusion, and the at least one protrusion abuts between the relay and the top surface of the PCB.

Because a current through the PCB and the main lead-out pin component is high, heat is severely generated. Disposition of the protrusion between the top surface of the PCB and the relay may increase a gap between the relay and the top surface of the PCB, so that a contact area of the top surface of the PCB and the main lead-out pin component with air can be increased. This facilitates heat dissipation, and may further improve a through-current density of the relay and the PCB. In addition, after the gap between the relay and the top surface of the PCB increases, a bus bar or a copper bar may be disposed on the top surface of the PCB, and the bus bar and the copper bar may further improve a through-current capability of the PCB.

In a possible implementation, the power distribution apparatus further includes a housing. The PCB and the plurality of relays are located in the housing. The housing includes two side walls that are disposed opposite to each other. One of the two side walls includes an air intake vent, and the other of the two side walls includes an air exhaust vent. In this way, heat dissipation efficiency of the power distribution apparatus can be improved, and the through-current capability of the power distribution apparatus is further improved.

In a possible implementation, in a direction from the air intake vent to the air exhaust vent, a projection of each of the at least one protrusion does not overlap a projection of each lead-out pin in the two groups of main lead-out pin components.

In other words, in the direction from the air intake vent to the air exhaust vent, each protrusion does not block any lead-out pin in the two groups of main lead-out pin components of the relay. In this disposing manner, when air enters from the air intake vent and flows to the air exhaust vent, each protrusion does not affect heat dissipation of any lead-out pin in the two groups of main lead-out pin components, so that heat dissipation efficiency of the power distribution apparatus can be further improved.

In a possible implementation, in the direction from the air intake vent to the air exhaust vent, each lead-out pin in each group of main lead-out pin components includes a first side surface and a second side surface that are disposed opposite to each other, and a third side surface and a fourth side surface that are adjacent to the first side surface and the second side surface. A sum of areas of the first side surface and the second side surface is less than a sum of areas of the third side surface and the fourth side surface.

In this manner, when air enters from the air intake vent and flows to the air exhaust vent, the air can be in full contact with the third side surface and the fourth side surface, thereby further improving heat dissipation efficiency of the power distribution apparatus.

In a possible implementation, each relay further includes two groups of main contact components and a coil. The two groups of main contact components are connected to the two groups of main lead-out pin components in one-to-one correspondence. Each group of main contact components includes a movable contact and a stationary contact. One of the movable contact and the stationary contact is connected to the input lead-out pin, and the other of the movable contact and the stationary contact is connected to the output lead-out pin. The coil is configured to drive the movable contact and the stationary contact of each of the two groups of main contact components to act with each other.

In this disposing manner, a closed/open state between the moving contact and the static contact of each of the two groups of main contact components may be controlled by using only one coil. This simplifies control logic, and can further reduce a size of the relay, thereby reducing the size of the power distribution apparatus.

In a possible implementation, each relay further includes a group of auxiliary contact components and a group of auxiliary contact lead-out pin components. The group of auxiliary contact components is located inside the relay, the group of auxiliary contact lead-out pin components is located outside the relay, and the group of auxiliary contact lead-out pin components is connected to the group of auxiliary contact components. The group of auxiliary contact components includes an auxiliary movable contact and an auxiliary stationary contact, and the auxiliary contact components are configured to be mechanically linked with each group of main contact components.

In a possible implementation, when a movable contact and a stationary contact that are connected to at least one of the two groups of main lead-out pin components change from an open state to a closed state, a state between the auxiliary movable contact and the auxiliary stationary contact changes; or when a movable contact and a stationary contact that are connected to each of the two groups of main lead-out pin components change from a closed state to an open state, a state between the auxiliary movable contact and the auxiliary stationary contact changes.

For example, the movable contact and the stationary contact that are connected to each group of main lead-out pin components are in a normally open state, and the auxiliary movable contact and the auxiliary stationary contact are in a normally open state. When the coil is energized, if a movable contact and a stationary contact that are connected to at least one of the two groups of main lead-out pin components change from an open state to a closed state, a relative action occurs between the auxiliary movable contact and the auxiliary stationary contact, and the auxiliary movable contact and the auxiliary stationary contact change from an open state to a closed state. When the coil changes from being energized to not being energized, one group of main lead-out pin components of the two groups of main lead-out pin components does not change from a closed state to an open state, and the auxiliary movable contact and the auxiliary stationary contact are still in a closed state. Only when the movable contact and the stationary contact that are connected to each of the two groups of main lead-out pin components change from the closed state to the open state, a relative action occurs between the auxiliary movable contact and the auxiliary stationary contact, and the auxiliary movable contact and the auxiliary stationary contact change from the closed state to the open state.

In other words, provided that the auxiliary movable contact and the auxiliary stationary contact are detected to be in the closed state, it may be determined that the movable contact and the stationary contact that are connected to at least one of the two groups of main lead-out pin components of the relay are in the closed state. Therefore, another relay connected to a same input line as the relay may be controlled to be in an open state. In this way, when the power distribution apparatus assembled by using the plurality of relays is simultaneously connected to two electric vehicles, a short circuit between positive electrodes of the two vehicles or a short circuit between negative electrodes of the two vehicles can be prevented. This can improve use safety of the relay, and then improve use safety of the charging pile.

In a possible implementation, the power distribution apparatus further includes a controller and a communication terminal. The controller and the communication terminal are connected by using the PCB. The communication terminal is configured to receive an external signal. The controller is configured to control, based on the external signal, the relay to be closed or opened.

According to a second aspect, an embodiment of this application provides a charging pile. The charging pile includes a power conversion apparatus, the power distribution apparatus in any possible implementation of the first aspect, and a plurality of charging interfaces. Each charging interface is configured to connect to an electric vehicle. The power conversion apparatus is configured to output a direct current to the power distribution apparatus, and the power distribution apparatus is configured to distribute the direct current to any charging interface.

In a possible implementation, the charging pile is configured to send a control signal to the power distribution apparatus, and the power distribution apparatus is configured to control on/off of a plurality of relays based on the control signal.

### BRIEF DESCRIPTION OF DRAWINGS

FIG. 1 is a diagram of a charging pile according to an embodiment of this application;
FIG. 2 is a diagram of a power conversion apparatus in FIG. 1;
FIG. 3 is another diagram of a power conversion apparatus in FIG. 1;
FIG. 4 is a schematic of a circuit connection of a power distribution apparatus in FIG. 1;
FIG. 5(a) is a diagram of a use scenario of a relay;
FIG. 5(b) is a diagram of a principle of a relay;
FIG. 6(a) and FIG. 6(b) are a schematic of a circuit connection of a power distribution apparatus according to an embodiment of this application;
FIG. 7 is a diagram of a structure of a relay in FIG. 6(a) and FIG. 6(b);
FIG. 8 is a diagram of assembly of the relay in FIG. 7 and a PCB;
FIG. 9 is a diagram of another structure of a relay in FIG. 6(a) and FIG. 6(b);
FIG. 10 is a diagram of still another structure of a relay in FIG. 6(a) and FIG. 6(b);
FIG. 11 is a diagram of yet another structure of a relay in FIG. 6(a) and FIG. 6(b);
FIG. 12(a) is an exploded view of a structure of the power distribution apparatus in FIG. 6(a) and FIG. 6(b);
FIG. 12(b) is a diagram of a structure of a PCB in FIG. 12(a);
FIG. 13 is a diagram of a charging pile according to an embodiment of this application; and
FIG. 14 is another diagram of a charging pile according to an embodiment of this application.

### DESCRIPTION OF EMBODIMENTS

For ease of understanding, terms in embodiments of this application are first explained.

Connection: It should be understood in a broad sense. For example, that A is connected to B may be that A is directly connected to B, or may be that A is indirectly connected to B through an intermediate medium.

In the descriptions, terms such as "first" and "second" are merely intended for a purpose of description, and shall not be understood as an indication or implication of relative importance or implicit indication of a quantity of indicated technical features. Therefore, a feature limited by "first", "second", or the like may explicitly or implicitly include one or more features.

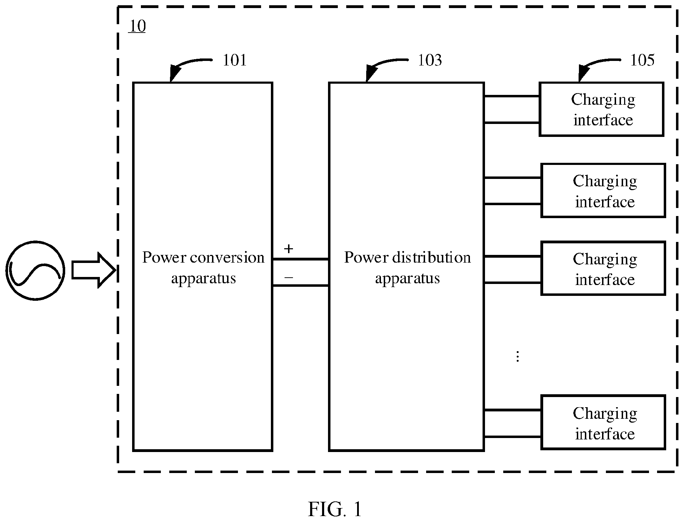

FIG. 1 is a diagram of a charging pile according to an embodiment of this application. The charging pile 10 includes a power conversion apparatus 101, a power distribution apparatus 103, and charging interfaces 105. An input end of the power conversion apparatus 101 is configured to receive an alternating current, an output end of the power conversion apparatus 101 is connected to an input end of the power distribution apparatus 103, an output end of the power distribution apparatus 103 is connected to an input end of the charging interface 105, and an output end of the charging interface 105 is configured to output a direct current. The power conversion apparatus 101 is configured to convert an alternating current into a direct current, the power distribution apparatus 103 is configured to distribute, to the charging interfaces 105, the direct current that is output by the power conversion apparatus 101, and the charging interface is configured to connect to an electric vehicle, so that the electric vehicle can be charged.

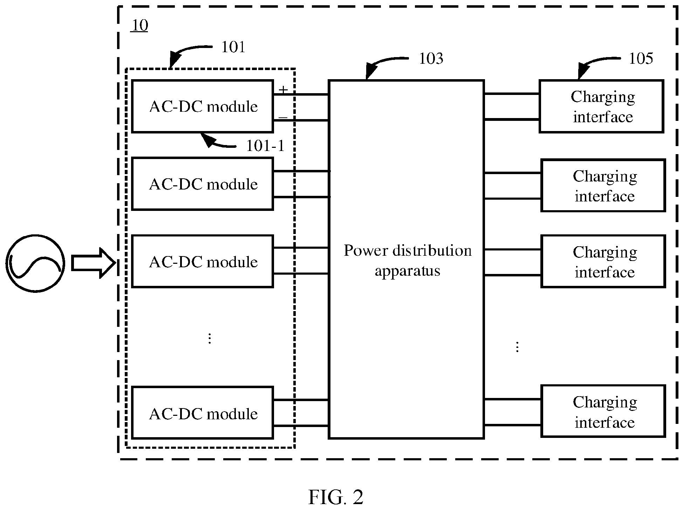

Specifically, FIG. 2 is a diagram of the power conversion apparatus 101 in FIG. 1. The power conversion apparatus 101 includes a plurality of AC-DC modules 101-1. Output ends of the plurality of AC-DC modules 101-1 are connected to a plurality of input ends of the power distribution apparatus 103. The power distribution apparatus 103 is configured to distribute, to the charging interfaces 105, direct currents that are output by the AC-DC modules 101-1.

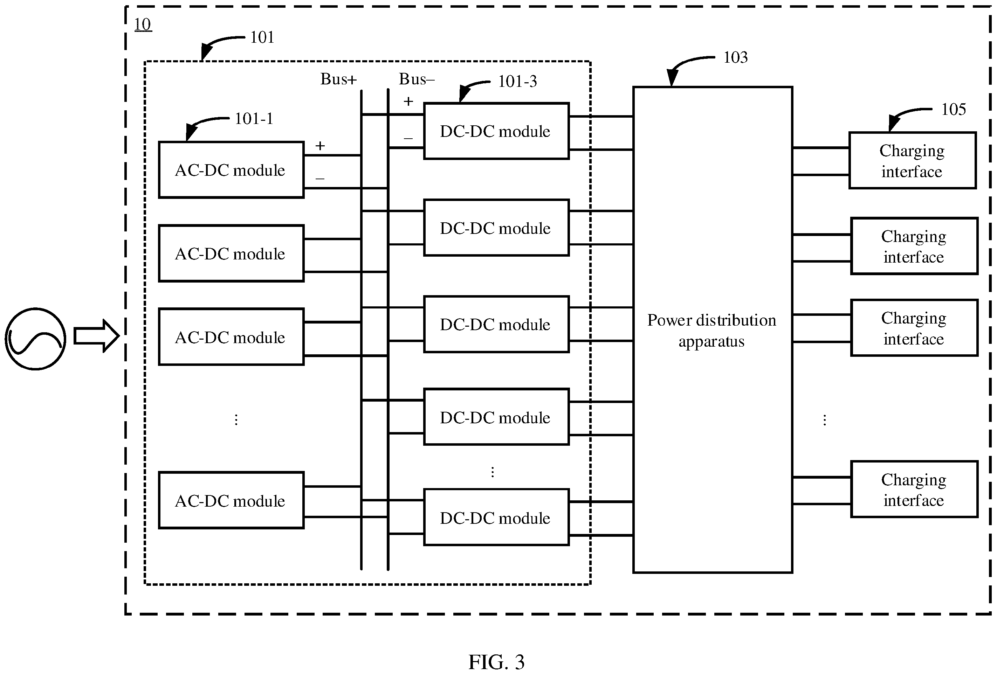

FIG. 3 is another diagram of the power conversion apparatus 101 in FIG. 1. The power conversion apparatus 101 includes a plurality of AC-DC modules 101-1 and a plurality of DC-DC modules 101-3. Output ends of the plurality of AC-DC modules 101-1 are connected to input ends of the plurality of DC-DC modules 101-3 through direct current buses, namely, Bus+ and Bus-, and output ends of the plurality of DC-DC modules 101-3 are connected to a plurality of input ends of the power distribution apparatus 103. The power distribution apparatus 103 is configured to distribute, to the charging interfaces 105, direct currents that are output by the DC-DC modules 101-3.

During actual application, the power distribution apparatus 103 includes a plurality of input ends, a plurality of output ends, and a plurality of switch components. The input ends of the power distribution apparatus 103 are configured to receive direct currents, the output ends of the power distribution apparatus 103 are connected to the charging interfaces, and the switch components are connected between the input ends and the output ends of the power distribution apparatus 103 to connect or disconnect current paths between the input ends and the output ends of the power distribution apparatus 103, so that a direct current that is output by the power conversion apparatus 101 can be distributed to the charging interfaces 105, to charge the electric vehicle.

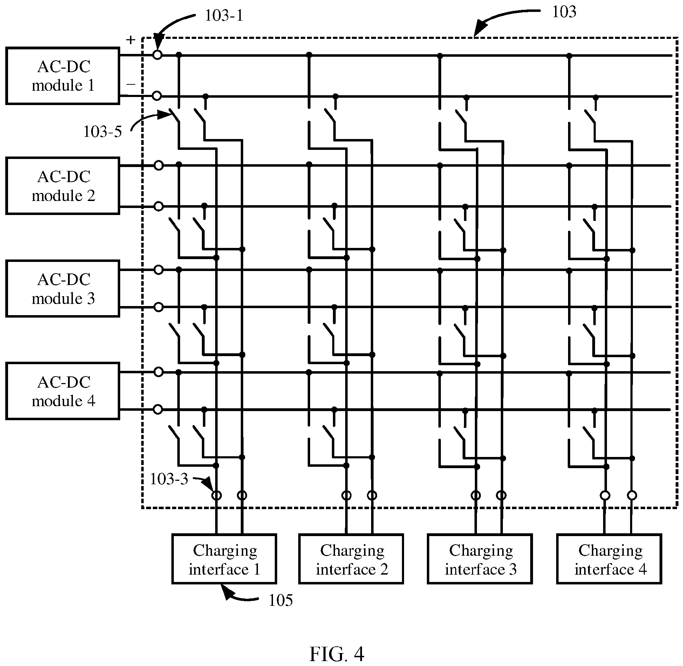

FIG. 4 is a schematic of a circuit connection of the power distribution apparatus 103 in FIG. 1. The power conversion apparatus 101 in FIG. 4 includes four AC-DC modules, and the power distribution apparatus 103 includes four groups of input ends 103-11, 103-13, 103-15, and 103-17, four groups of output ends 103-31, 103-33, 103-35, and 103-37, and a plurality of switch components 103-5. Switch components 103-5 are connected between each group of input ends 103-1 and each group of output ends 103-3. It is assumed that a rated output power of each AC-DC module is 60 kW. For example, a charging interface 1 is connected to an electric vehicle, and a charging power required by the electric vehicle is 120 kW. The charging pile 10 may control switch components 103-5 connected between an AC-DC module 1 and the charging interface 1 and switch components 103-5 connected between an AC-DC module 2 and the charging interface 1 to be turned on, so that the charging interface 1 can output electric energy with a power of 120 kW to charge the electric vehicle. Alternatively, the charging pile 10 may control the switch components 103-5 connected between the AC-DC module 2 and the charging interface 1 and switch components 103-5 connected between an AC-DC module 3 and the charging interface 1 to be turned on, so that the charging interface 1 can output electric energy with a power of 120 kW to charge the electric vehicle. Similarly, the charging pile 10 may control, based on the charging power of the electric vehicle and the rated output power of the AC-DC module, the switch components 103-5 to be turned on or off, so that the charging interface 105 outputs an appropriate power to charge the electric vehicle.

It should be noted that each group of input ends of the power distribution apparatus 103 includes a positive input end and a negative input end, and each group of output ends includes a positive output end and a negative output end. When a switch component 103-5 is connected between one group of input ends and one group of output ends, a switch needs to be connected between the positive input end and the positive output end, and a switch needs to be connected between the negative input end and the negative output end.

During specific use, some input ends and some output ends of the power distribution apparatus 103 may alternatively be directly connected, and are not connected by using the switch component 103-5.

With an increase in a quantity of electric vehicles and improvement of a charging power, requirements on the power distribution apparatus 103 also gradually increase. How to reduce a size of the power distribution apparatus 103 and improve flexibility in power distribution of the power distribution apparatus 103 while improving a through-current capability of the power distribution apparatus 103 is a problem that needs to be resolved.

Based on this, an embodiment of this application provides a power distribution apparatus. The power distribution apparatus has a strong through-current capability, a small size, and high flexibility in power distribution.

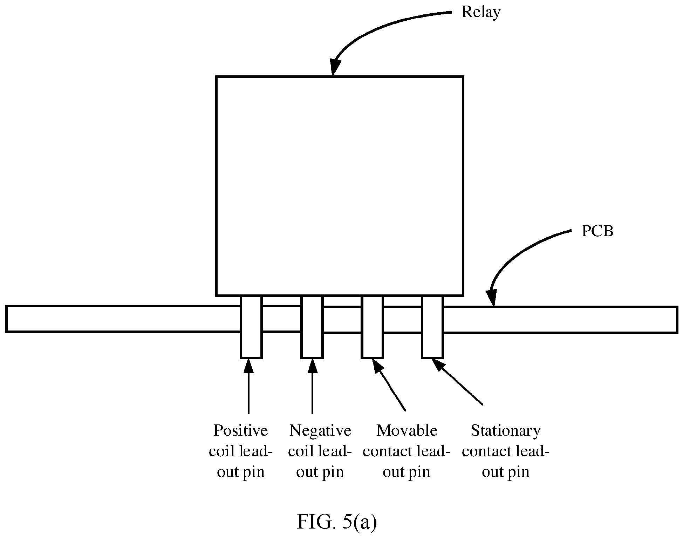

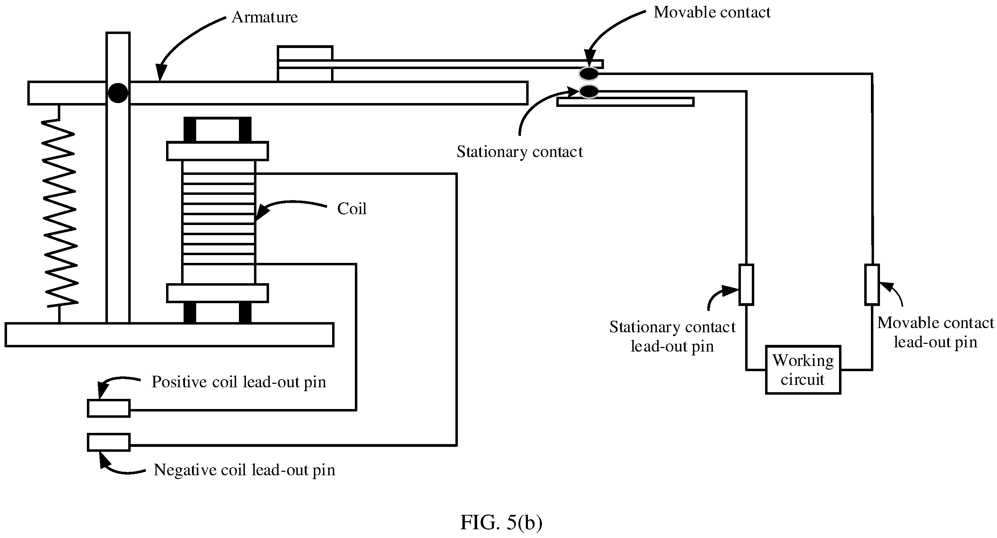

To better understand the technical solutions of this application, a principle of a relay is first described. FIG. 5(a) is a diagram of a use scenario of a relay, and FIG. 5(b) is a diagram of an internal principle of a relay. With reference to FIG. 5(a) and FIG. 5(b), a positive coil lead-out pin, a negative coil lead-out pin, a movable contact lead-out pin, and a stationary contact lead-out pin of the relay are connected to a PCB through soldering. The positive coil lead-out pin and the negative coil lead-out pin are configured to receive a current, and the moving contact lead-out pin and the stationary contact lead-out pin are configured to connect to a working circuit (that is, a circuit whose connection and disconnection need to be controlled) in the PCB. For example, a movable contact and a stationary contact are in a normally open state. When the positive coil lead-out pin and the negative coil lead-out pin do not receive a current, the movable contact and the stationary contact are in an unconnected state, and the working circuit is not connected in this case. After the positive coil lead-out pin and the negative coil lead-out pin receive a current, the current generates a magnetic field through a coil, to attract an armature to act, so that the movable contact and the stationary contact of the relay are closed, and the working circuit is connected. Whether the coil is energized is controlled, so that a connection status between the movable contact and the stationary contact of the relay can be controlled, and the relay can connect or disconnect the working circuit.

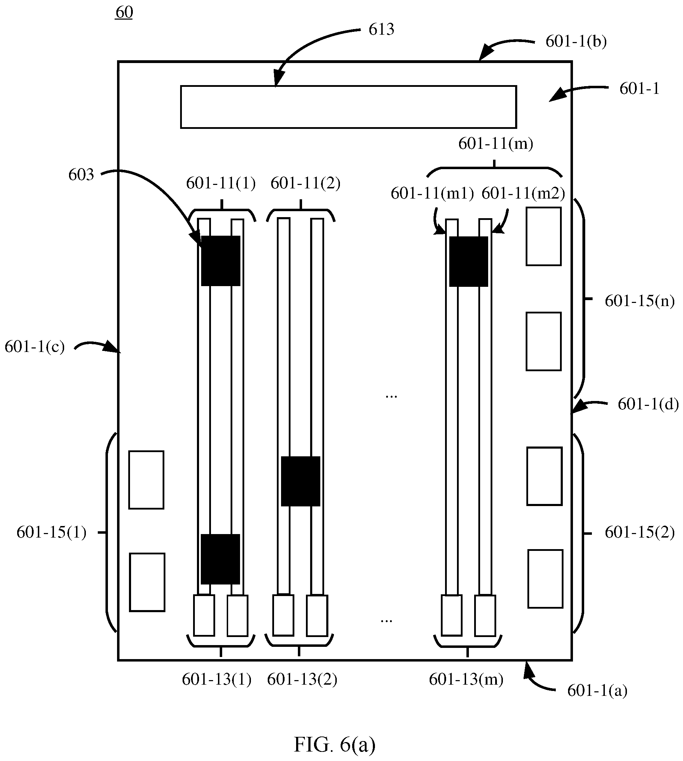

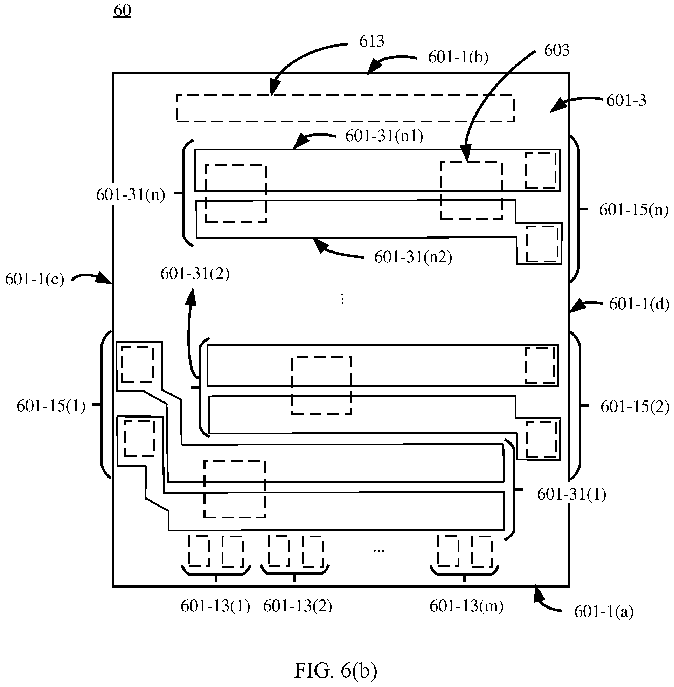

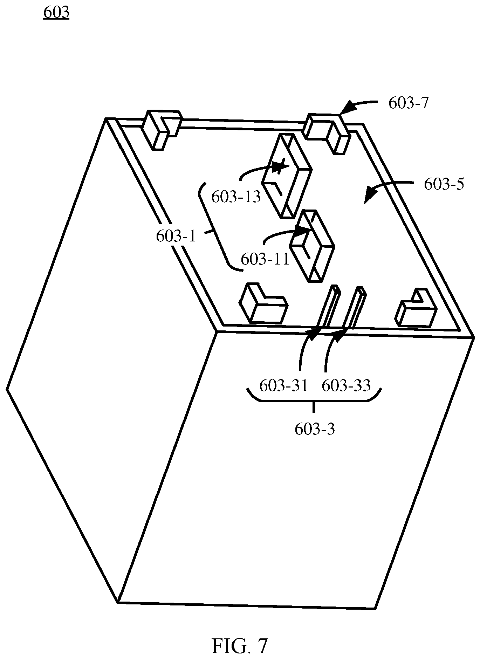

The following describes a power distribution apparatus provided in an embodiment of this application. With reference to FIG. 6(a), FIG. 6(b), and FIG. 7, FIG. 6(a) and FIG. 6(b) are schematics of a circuit connection of a power distribution apparatus according to an embodiment of this application, and FIG. 7 is a diagram of a structure of a relay in FIG. 6(a) and FIG. 6(b). Specifically, FIG. 6(a) is a schematic of a circuit on a top surface of a PCB of the power distribution apparatus according to an embodiment of this application, and FIG. 6(b) is a schematic of a circuit on a bottom surface of the PCB of the power distribution apparatus according to an embodiment of this application. A power distribution apparatus 60 includes a printed circuit board PCB 601 and a plurality of relays 603. The PCB 601 includes a top surface 601-1 and a bottom surface 601-3 that are disposed opposite to each other. The top surface 601-1 of the PCB or an interior (not shown in the figure) of the PCB includes a plurality of groups of current input paths 601-11 (for example, 601-11(1), 601-11(2), ..., and 601-11(m)). The bottom surface 601-3 of the PCB includes a plurality of groups of current output paths 601-31 (for example, 601-31(1), 601-31(2), ..., and 601-31(n)). Each group of current input paths 601-11 is configured to receive a current, and each group of current output paths 601-31 is configured to output a current. Each group of current input paths 601-11 includes two current input paths: a positive current input path and a negative current input path. Each group of current output paths 601-31 includes two current output paths: a positive current output path and a negative current output path.

Each of the plurality of relays 603 includes a main lead-out pin component 603-1 located outside the relay. The main lead-out pin component 603-1 includes an input lead-out pin 603-11 and an output lead-out pin 603-13. The input lead-out pin 603-11 is connected to one of a group of current input paths 601-11, and the output lead-out pin 603-13 is connected to one of a group of current output paths 601-31. The main lead-out pin component 603-1 is configured to connect or disconnect a current transmission path between the current input path and the current output path. Output lead-out pins 603-13 of at least two of the plurality of relays 603 are connected to a same group of current output paths 601-31, and input lead-out pins 603-11 of the at least two relays 603 are connected to at least two groups of current input paths 601-11 in one-to-one correspondence.

As shown in FIG. 6(a) and FIG. 6(b), for example, a relay 603 is connected between the current input path 601-11(m) and the current output path 601-31(n). An input lead-out pin 603-11 of the relay 603 may be connected to a positive current input path 601-11(m1) of the current input path 601-11(m), and an output lead-out pin 603-13 may be connected to a positive current output path 601-31(n1) of the current output path 601-31(n). Alternatively, an input lead-out pin 603-11 of the relay 603 may be connected to a negative current input path 601-11(m2) of the current input path 601-11(m), and an output lead-out pin 603-13 may be connected to a negative current output path 601-31(n2) of the current output path 601-31(n). Therefore, the relay 603 can be used to connect or disconnect a current transmission path between the positive current input path 601-11(m1) and the positive current output path 601-31(n1), or connect or disconnect a current transmission path between the negative current input path 601-11(m2) and the negative current output path 601-31(n2).

During specific implementation, a quantity of relays 603 and current input paths and current output paths that need to be connected may be set based on an actual situation.

In a possible implementation, when relays 603 are connected between one group of current input paths 601-11 and one group of current output paths 601-31, two relays 603 need to be connected. In other words, one relay 603 needs to be connected between the positive current input path and the positive current output path, and one relay 603 needs to be connected between the negative current input path and the negative current output path.

In a possible implementation, each group of current input paths 601-11 and each group of current output paths 601-31 are connected by using two relays 603. In this disposing manner, a current of each group of current input paths 601-11 may be flexibly scheduled to each group of current output paths 601-31. In another possible implementation, some current input paths 601-11 and some current output paths 601-31 are connected by using relays 603, and the other current input paths 601-11 and the other current output paths 601-31 may be directly connected through wiring on the PCB. In this disposing manner, a quantity of used relays 603 can be reduced, thereby reducing a size of the power distribution apparatus 60.

The plurality of groups of current output paths 601-31 are disposed on the bottom surface 601-3 of the PCB, so that an area of the PCB can be fully used. These current output paths 601-31 may collect currents of at least two groups of current input paths 601-11, and output a collected current to an electric vehicle. In this way, a through-current density of the power distribution apparatus 60 can be improved, and the size of the power distribution apparatus 60 can be reduced. In addition, assembly of the relay 603 and the PCB is simple, and a power distribution function can be implemented without using a large quantity of external cables, so that manufacturability and maintainability of the power distribution apparatus 60 are good.

In a possible implementation, the top surface 601-1 of the PCB and the inside of the PCB include copper foil networks, and these copper foil networks form the plurality of groups of current input paths 601-11. In another possible implementation, the top surface 601-1 of the PCB includes a copper bar or an aluminum bar, and the copper bar or the aluminum bar on the top surface 601-1 of the PCB forms the plurality of groups of current input paths 601-11. The copper bar or the aluminum bar has a large through-current cross-sectional area and a strong through-current capability, so that a through-current capability of the power distribution apparatus 60 can be further improved.

In a possible implementation, each group of current output paths 601-31 includes a copper bar or an aluminum bar, and the copper bar or the aluminum bar is disposed on the bottom surface 601-3 of the PCB and is configured to transmit a current. The copper bar or the aluminum bar has a strong through-current capability, so that the through-current capability of the power distribution apparatus 60 can be improved. During specific disposition, when the current output path 601-31 needs to output a large current, a thickness of the copper bar or the aluminum bar may be increased, to improve the through-current capability of the copper bar or the aluminum bar. In a possible implementation, the copper bar may be crimped on the bottom surface 601-3 of the PCB. In another possible implementation, the copper bar may be soldered to the bottom surface 601-3 of the PCB.

In a possible implementation, a via is included between the top surface of the PCB and the bottom surface of the PCB. The input lead-out pin 603-11 of the relay 603 is connected to the positive current input path or the negative current input path of the current input path 601-11 through the via. The output lead-out pin 603-13 of the relay 603 is connected to the positive current output path or the negative current output path of the current output path 601-31 through the via.

In a possible implementation, when each group of current output paths 601-31 includes a copper bar or an aluminum bar, to facilitate soldering of the output lead-out pin 603-13 to the copper bar or the aluminum bar through the via, the output lead-out pin 603-13 may be set to be longer in length.

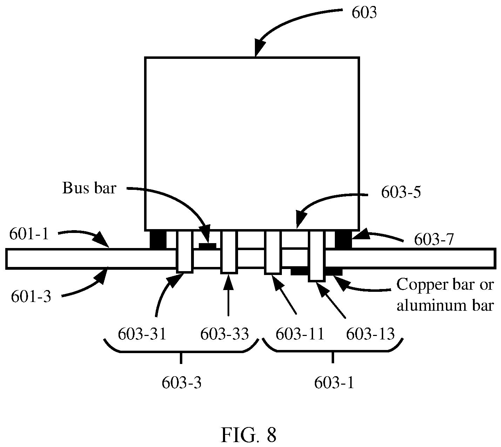

Specifically, FIG. 8 is a diagram of assembly of the relay 603 in FIG. 7 and the PCB. Because the copper bar or the aluminum bar is crimped on the bottom surface 601-3 of the PCB, and the output lead-out pin 603-13 needs to be connected to the copper bar or the aluminum bar on the bottom surface 601-3 of the PCB, the output lead-out pin 603-13 can be soldered to the copper bar or the aluminum bar only after the output lead-out pin 603-13 passes through the copper bar or the aluminum bar through the via for a distance. The input lead-out pin 603-11 does not need to be connected to the copper bar or the aluminum bar on the bottom surface 601-3 of the PCB. Therefore, the input lead-out pin 603-11 only needs to pass through the bottom surface 601-3 of the PCB for a distance, and does not need to pass through the copper bar or the aluminum bar for a distance. Based on this, a length of the output lead-out pin 603-13 may be set to be greater than a length of the input lead-out pin 603-11.

In a possible implementation, with reference to FIG. 7 and FIG. 8, the relay 603 further includes a coil (not shown in the figure) and a coil lead-out pin component 603-3. The coil lead-out pin component 603-3 is connected to a signal line in the PCB through the via, to receive a control current. After the coil lead-out pin component 603-3 receives the control current, the coil drives the movable contact connected to the main lead-out pin component 603-1 to act, so that the movable contact and the stationary contact that are connected to the main lead-out pin component 603-1 are closed.

In a possible implementation, still with reference to FIG. 7 and FIG. 8, a bottom wall 603-5 of the relay 603 further includes a plurality of protrusions 603-7, and the plurality of protrusions 603-7 abut between the bottom wall 603-5 and the top surface 601-1 of the PCB.

During specific disposition, a cross-sectional shape of the protrusion 603-7 may be a rectangle, a square, a circle, an "L" shape, a trapezoid, or the like, and a quantity of protrusions 603-7 may be 2, 3, or the like. The shape and the quantity of protrusions 603-7 are not limited in this application.

It should be noted that disposition locations of the main lead-out pin component 603-1, the coil lead-out component 603-3, and the plurality of protrusions 603-7 in FIG. 7 are merely examples. During specific use, locations of the main lead-out pin component 603-1, the coil lead-out component 603-3, and the plurality of protrusion 603-7 may be flexibly disposed based on an actual use scenario.

In a possible implementation, a surface of the protrusion 603-7 may further include a cutting pattern, and the protrusion 603-7 may be broken along the cutting pattern by band or using tools such as diagonal pliers, to change a length of the protrusion 603-7. For example, the surface of the protrusion 603-7 may include at least one cutting pattern. When the surface of the protrusion 603-7 includes a plurality of cutting patterns, the protrusion 603-7 is broken along different cutting patterns, to obtain protrusions 603-7 of different lengths. Therefore, a distance between the bottom wall 603-5 of the relay 603 and the top surface 601-1 of the PCB can be flexibly changed.

Because the through-current density of the PCB and the main lead-out pin component 603-1 is high, heat is severely generated. Disposition of the protrusion 603-7 between the top surface 601-1 of the PCB and the bottom wall 603-5 of the relay 603 may increase a gap between the bottom wall 603-5 and the top surface 601-1 of the PCB, so that a contact area of the top surface 601-1 of the PCB and the main lead-out pin component 603-1 with air can be increased. This facilitates heat dissipation, and may further improve a through-current density of the relay 603 and the PCB. In addition, after the gap between the bottom wall 603-5 and the top surface 601-1 of the PCB increases, a bus bar or a copper bar may be disposed on the top surface 601-1 of the PCB, and the bus bar and the copper bar may further improve a through-current capability of the PCB. Furthermore, these gaps may provide an air duct to actively dissipate heat for the main lead-out pin component 603-1, so that the through-current capability of the PCB may be further improved.

In a possible implementation, the length of the protrusion 603-7 is 1 mm to 10 mm (including 1 mm and 10 mm). In this disposing manner, the gap between the top surface 601-1 of the PCB and the bottom wall 603-5 can meet a heat dissipation requirement, and the size of the power distribution apparatus 60 is not excessively large. When the length of the protrusion 603-7 is 3 mm to 6 mm, the power distribution apparatus 60 has a good heat dissipation capability and a small overall structure.

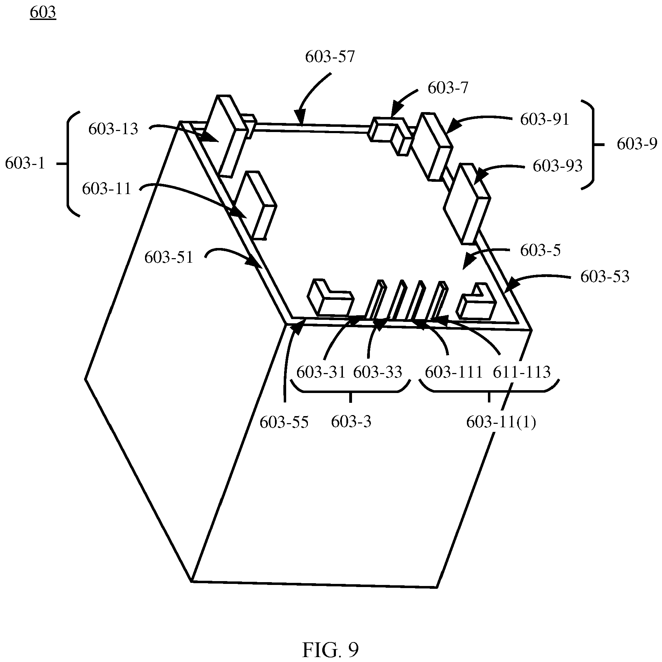

FIG. 9 is a diagram of another structure of the relay in FIG. 6(a) and FIG. 6(b). Different from FIG. 7, the relay shown in FIG. 9 includes two groups of main lead-out pin components: a main lead-out pin component 603-1 and a main lead-out pin component 603-9.

It may be learned from the foregoing analysis that two relays shown in FIG. 7 need to be connected between one group of current input paths 601-11 and one group of current output paths 601-31. That is, one relay shown in FIG. 7 needs to be connected between the positive current input path and the positive current output path, and one relay shown in FIG. 7 needs to be connected between the negative current input path and the negative current output path. However, if the relay shown in FIG. 9 is used, only one relay shown in FIG. 9 needs to be connected between one group of current input paths 601-11 and one group of current output paths 601-31. That is, one group of main lead-out pin components is connected between the positive current input path and the positive current output path, the other group of main lead-out pin components is connected between the negative current input path and the negative current output path. Compared with the relay shown in FIG. 7, the relay shown in FIG. 9 can reduce the size of the power distribution apparatus 60.

In a possible implementation, the relay 603 further includes two groups of main contact components (not shown in the figure). The two groups of main contact components are connected to the two groups of main lead-out pin components 603-1 and 603-9 in one-to-one correspondence. Each group of main contact components includes a movable contact and a stationary contact, one of the movable contact and the stationary contact is connected to the input lead-out pin of one group of main lead-out pin components, and the other of the movable contact and the stationary contact is connected to the output lead-out pin of the group of main lead-out pin components.

In a possible implementation, the relay 603 includes a coil (not shown in FIG. 9) and a coil lead-out pin component 603-3. The coil is connected to the coil lead-out pin component 603-3. The coil is configured to drive the movable contact and the stationary contact of each of the two groups of main contact components to act with each other. In this implementation, a closed/open state between the movable contact and the stationary contact of each group of main contact components may be controlled by using only one coil. This simplifies control logic, and can further reduce a size of the relay 603, thereby reducing the size of the power distribution apparatus 60.

Still with reference to FIG. 9, in a possible implementation, the relay 603 further includes an auxiliary contact lead-out pin component 603-11(1) and an auxiliary contact component. The auxiliary contact component is located inside the relay 603, and the auxiliary contact lead-out pin component 603-11(1) is located outside the relay 603, and the auxiliary contact lead-out pin component 603-11(1) is connected to the auxiliary contact component. Specifically, the auxiliary contact lead-out pin component 603-11(1) includes an auxiliary movable contact lead-out pin 603-111 and an auxiliary stationary contact lead-out pin 603-113. The auxiliary movable contact lead-out pin 603-111 is connected to an auxiliary movable contact of the auxiliary contact component, the auxiliary stationary contact lead-out pin 603-113 is connected to an auxiliary stationary contact of the auxiliary contact component. The auxiliary movable contact and the auxiliary stationary contact are mechanically linked with the two groups of main contact components, so that the auxiliary contact component may perform relative actions with the two groups of main contact components simultaneously.

In a possible implementation, the auxiliary movable contact and the auxiliary stationary contact are in a normally open state. When the coil is not energized, no relative action (not change from an open state to a closed state) occurs between the movable contact and the stationary contact that are connected to the main lead-out pin component 603-1, and no relative action occurs between the movable contact and the stationary contact that are connected to the main lead-out pin component 603-9. Therefore, no action occurs between the auxiliary movable contact and the auxiliary stationary contact. In other words, the auxiliary movable contact and the auxiliary stationary contact are still in the open state.

After the coil is energized, when a relative action (change from an open state to a closed state) occurs between at least one pair of the movable contact and the stationary contact that are connected to the main lead-out pin component 603-1 and the movable contact and the stationary contact that are connected to the main lead-out pin component 603-9, a relative action occurs between the auxiliary movable contact and the auxiliary stationary contact. In other words, the auxiliary movable contact and the auxiliary stationary contact change to a closed state.

When the coil changes from being energized to not being energized, in a normal state, the movable contacts and the stationary contacts of both the two groups of main contact components perform relative actions (both change from the closed state to the open state). Therefore, the auxiliary movable contact and the auxiliary stationary contact are driven to change from the closed state to the open state. If the movable contact and the stationary contact of one of the two groups of main contact components are adhered and cannot perform a relative action, and a relative action occurs only between the movable contact and the stationary contact that are connected to the other group of main contact components, no relative action occurs between the auxiliary movable contact and the auxiliary stationary contact, and the auxiliary movable contact and the auxiliary stationary contact are still in the closed state.

In other words, provided that the auxiliary movable contact and the auxiliary stationary contact are detected to be in the closed state, it may be determined that the movable contact and the stationary contact that are connected to at least one of the two groups of main lead-out pin components of the relay 603 are in the closed state. Therefore, another relay 603 (the another relay 603 and the relay 603 receive direct currents that are output by a same power conversion module) connected to a same input line as the relay 603 may be controlled to be in an open state. In this way, when the power distribution apparatus assembled by using the plurality of relays 603 is simultaneously connected to two electric vehicles, a short circuit between positive electrodes of the two vehicles or a short circuit between negative electrodes of the two vehicles can be prevented. This can improve use safety of the power distribution apparatus, and then improve use safety of a charging pile. During specific implementation, the auxiliary contact lead-out pin component 603-11(1) is connected to a detection circuit by using the PCB, and a controller determines a closed/open state between the auxiliary movable contact and the auxiliary stationary contact based on an output signal of the detection circuit. For example, when the coil changes from being energized to not being energized, to be specific, when the controller controls the movable contact and the stationary contact that are connected to the main contact component to change from a connected state to a disconnected state, if the movable contact and the stationary contact that are connected to at least one of the two groups of main lead-out pin components 603-1 and 603-9 are adhered to each other, no relative action occurs between the auxiliary movable contact and the auxiliary stationary contact, and the auxiliary movable contact and the auxiliary stationary contact are still in the closed state. In this case, the controller determines that the auxiliary movable contact and the auxiliary stationary contact do not change from the closed state to the open state, and then determines that the relay 603 is faulty.

In another possible implementation, the auxiliary movable contact and the auxiliary stationary contact are in a normally closed state. When the coil is not energized, to be specific, the movable contact and the stationary contact of each group of main contact components are in an open state, the auxiliary movable contact and the auxiliary stationary contact are in a closed state.

After the coil is energized, when a relative action occurs between the movable contact and the stationary contact of at least one of the two groups of main contact components, and the movable contact and the stationary contact change from the open state to a closed state, a relative action occurs between the auxiliary movable contact and the auxiliary stationary contact, and the auxiliary movable contact and the auxiliary stationary contact change from the closed state to an open state.

When the coil changes from being energized to not being energized, in a normal state, the movable contacts and the stationary contacts of both the two groups of main contact components perform relative actions (both change from the closed state to the open state). Therefore, the auxiliary movable contact and the auxiliary stationary contact are driven to change from the open state to the closed state. If the movable contact and the stationary contact of one of the two groups of main contact components are adhered and cannot perform a relative action, and a relative action occurs only between the movable contact and the stationary contact that are connected to the other group of main contact components, the auxiliary movable contact and the auxiliary stationary contact are still in the open state.

In other words, provided that the auxiliary movable contact and the auxiliary stationary contact are detected to be in the open state, it may be determined that the movable contact and the stationary contact that are connected to at least one of the two groups of main lead-out pin components of the relay 603 are in the closed state. Therefore, another relay 603 connected to a same input line as the relay 603 may be controlled to be in an open state. In this way, when the power distribution apparatus assembled by using the plurality of relays 603 is simultaneously connected to two electric vehicles, a short circuit between positive electrodes of the two vehicles or a short circuit between negative electrodes of the two vehicles can be prevented. This can improve use safety of the power distribution apparatus, and then improve use safety of a charging pile.

During specific implementation, the auxiliary contact lead-out pin component 603-11(1) is connected to a detection circuit by using the PCB, and a controller determines a closed/open state between the auxiliary movable contact and the auxiliary stationary contact based on an output signal of the detection circuit, to determine a status of the main contact component. For example, when the coil changes from being energized to not being energized, to be specific, when the controller controls the movable contact and the stationary contact that are connected to the main contact component to change from a closed state to an open state, if the movable contact and the stationary contact that are connected to at least one of the two groups of main lead-out pin components are adhered to each other, the auxiliary movable contact and the auxiliary stationary contact are still in the open state. In this case, the controller determines that the auxiliary movable contact and the auxiliary stationary contact do not change from the open state to the closed state, and then determines that the relay 603 is faulty.

In a possible implementation, a cross-sectional area of each lead-out pin of the main lead-out pin component 603-1 and the main lead-out pin component 603-9 is 10 mm² to 30 mm². In this disposing manner, through-current capabilities of the main lead-out pin component 603-1 and the main lead-out pin component 603-9 are strong, and heat dissipation capabilities of the main lead-out pin component 603-1 and the main lead-out pin component 603-9 are good.

In a possible implementation, a distance between lead-out pins in the main lead-out pin component 603-1 and lead-out pins in the main lead-out pin component 603-9 is 5 mm to 50 mm. Therefore, a distance between an input lead-out pin 603-11 and an output lead-out pin 603-13 and a distance between an input lead-out pin 603-91 and an output lead-out pin 603-93 meet a creepage distance requirement for basic insulation at 1000 Vdc as specified in the GB/T 16935.1, GB/T 18487.1, IEC 60664-1, IEC 62477-1, UL2202, and another relay industry standard. In this way, the power distribution apparatus 60 can adapt to most electric vehicle charging scenarios, thereby improving use safety of the power distribution apparatus 60.

In a possible implementation, when a movable contact and a stationary contact that are connected to the main lead-out pin component 603-1 are in an open state, and a movable contact and a stationary contact that are connected to the main lead-out pin component 603-9 are in an open state, an open distance between each group of movable contact and stationary contact is greater than or equal to 1.5 mm. In this way, a safety regulation requirement can be met, use reliability of the relay 603 can be improved, and use reliability of the power distribution apparatus 60 can be improved.

Still with reference to FIG. 6(a) and FIG. 6(b), the PCB includes a plurality of groups of input terminals 601-13(1), 601-13(2), ..., and 601-13(m), and a plurality of groups of output terminals 601-15(1), 601-15(2), ..., and 601-15(n). The plurality of groups of input terminals 601-13(1), 601-13(2), ..., and 601-13(m) are connected to the plurality of groups of current input paths 601-11(1), 601-11(2), ..., and 601-11(m) in one-to-one correspondence, and the plurality of groups of output terminals 601-15(1), 601-15(2), ..., and 601-15(n) are connected to the plurality of groups of current output paths 601-31(1), 601-31(2), ..., and 601-31(n) in one-to-one correspondence. Each group of current input paths is configured to receive a current through a corresponding group of input terminals, and each group of current output paths is configured to output a current through a corresponding group of output terminals. The PCB includes a first edge 601-1(a) and a second edge 601-1(b) that are disposed opposite to each other, and a third edge 601-1(c) and a fourth edge 601-1(d) that are disposed opposite to each other.

The plurality of groups of input terminals 601-13(1), 601-13(2), ..., and 601-13(m) are arranged along at least one of the first edge 601-1(a) and the second edge 601-1(b), and the plurality of groups of current input paths 601-11(1), 601-11(2), ..., and 601-11(m) extend in a direction from the first edge 601-1(a) to the second edge 601-1(b).

In a possible implementation, as shown in FIG. 6(a), the plurality of groups of input terminals 601-13(1), 601-13(2), ..., and 601-13(m) are arranged along the first edge 601-1(a). When the plurality of groups of input terminals 601-13(1), 601-13(2), ..., and 601-13(m) are arranged along the first edge 601-1(a), another device may be further disposed at a position that is on the PCB and that is close to the second edge 601-1(b), so that utilization of the PCB can be improved.

The plurality of groups of output terminals 601-15(1), 601-15(2), ..., 601-15(n) are arranged along at least one of the third edge 601-1(c) and the fourth edge 601-1(d), and the plurality of groups of current output paths 601-31(1), 601-31(2), ..., 601-31(n) extend in a direction from the third edge 601-1(c) to the fourth edge 601-1(d).

The plurality of groups of input terminals 601-13(1), 601-13(2), ..., and 601-13(m) are arranged along at least one of the first edge 601-1(a) and the second edge 601-1(b), and the plurality of groups of output terminals 601-15(1), 601-15(2), ..., and 601-15(n) are arranged along at least one of the third edge 601-1(c) and the fourth edge 601-1(d). The disposing manner allows an area of the top surface 601-1 of the PCB can be fully used, thereby reducing the size of the power distribution apparatus 60.

In a possible implementation, the plurality of groups of input terminals 601-13(1), 601-13(2), ..., and 601-13(m) and the plurality of groups of output terminals 601-15(1), 601-15(2), ..., and 601-15(n) are all disposed on the top surface 601-1 of the PCB.

In a possible implementation, the plurality of groups of input terminals 601-13(1), 601-13(2), ..., and 601-13(m) are configured to receive a current. For example, the plurality of groups of input terminals 601-13(1), 601-13(2), ..., and 601-13(m) are respectively configured to connect to different power converters (an AC-DC converter, a DC-DC converter, a DC-AC converter, or the like), so that currents that are output by the different power converters can be received. The plurality of groups of output terminals 601-15(1), 601-15(2), ..., and 601-15(n) are configured to output a current. For example, the plurality of groups of output terminals 601-15(1), 601-15(2), ..., and 601-15(n) are respectively configured to connect to different charging interfaces, and the charging interfaces are configured to connect to electric vehicles. Therefore, the power distribution apparatus 60 can output a current to charge the electric vehicles.

The plurality of groups of current input paths 601-11(1), 601-11(2), ..., and 601-11(m) extend in the direction from the first edge 601-1(a) to the second edge 601-1(b), and the plurality of groups of current output paths 601-31(1), 601-31(2), ..., and 601-31(n) extend in the direction from the third edge 601-1(c) the fourth edge 601-1(d). The disposing manner allows wiring of the PCB to be normalized, thereby further reducing the size of the power distribution apparatus 60. In other words, in a direction from the top surface 601-1 of the PCB to the bottom surface 601-3 of the PCB, projections of the plurality of groups of current input paths 601-11(1), 601-11(2), ..., and 601-11(m) and projections of the plurality of groups of current output paths 601-31(1), 601-31(2), ..., and 601-31(n) are cross-distributed in rows and columns. In this way, wiring of the PCB can be normalized, so that a size of the PCB can be reduced, and the size of the power distribution apparatus 60 can be reduced.

In a possible implementation, a bottom wall 603-5 of the relay 603 is in a quadrilateral shape, and the two input lead-out pins and the two output lead-out pins of the two groups of main lead-out pin components 603-1 and 603-9 are arranged at intervals in a circumferential direction of the bottom wall 603-5. Projections of the two input lead-out pins 603-11 and 603-91 of the two groups of main lead-out pin components 603-1 and 603-9 do not overlap in the direction from the first edge 601-1(a) to the second edge 601-1(b). In other words, in the direction in which the current input paths 601-11 extend, the projections of the two input lead-out pins 603-11 and 603-91 of the two groups of main lead-out pin components 603-1 and 603-9 do not overlap.

With reference to FIG. 6(a), FIG. 6(b), and FIG. 9, the current input path 601-11(1) is used as an example. The current input path 601-11(1) includes a positive current input path and a negative current input path. The two input lead-out pins 603-11 and 603-91 of the two groups of main lead-out pin components 603-1 and 603-9 are respectively connected to one positive current input path and one negative current input path, and the positive current input path and the negative current input path need to be disposed independently of each other. Therefore, in the direction in which the current input path 601-11 extends, when the projections of the two input lead-out pins 603-11 and 603-91 of the two groups of main lead-out pin components 603-1 and 603-9 do not overlap, a plurality of current input paths on the PCB may be parallel to each other and disposed independently of each other, thereby facilitating the normalized wiring of the PCB, and reducing the size of the PCB.

In a possible implementation, projections of the two output lead-out pins 603-13 and 603-93 of the two groups of main lead-out pin components 603-1 and 603-9 do not overlap in the direction from the third edge 601-1(c) to the fourth edge 601-1(d). In other words, in the direction in which the current output paths 601-31 extend, the projections of the two output lead-out pins 603-13 and 603-93 of the two groups of main lead-out pin components 603-1 and 603-9 do not overlap.

Similarly, with reference to FIG. 6(a), FIG. 6(b), and FIG. 9, the current output path 601-31(1) is used as an example. The current output path 601-31(1) includes a positive current output path and a negative current output path. The two output lead-out pins 603-13 and 603-93 of the two groups of main lead-out pin component 603-1 and 603-9 are respectively connected to one positive current output path and one negative current output path, and the positive current output path and the negative current output path need to be disposed independently of each other. Therefore, in the direction in which the current output path 601-31 extends, when the projections of the two output lead-out pins 603-13 and 603-93 of the two groups of main lead-out pin components 603-1 and 603-9 do not overlap, a plurality of current output paths on the PCB may be parallel to each other and disposed independently of each other, thereby facilitating the normalized wiring of the PCB, and reducing the size of the PCB.

Still with reference to FIG. 9, the bottom wall 603-5 of the relay 603 includes a fifth edge 603-51 and a sixth edge 603-53 that are disposed opposite to each other, and a seventh edge 603-55 and an eighth edge 603-57 that are disposed opposite to each other.

In a possible implementation, the main lead-out pin component 603-1 is arranged close to the fifth edge 603-51, and the main lead-out pin component 603-9 is arranged close to the sixth edge 603-53. In addition, the two input lead-out pins and two output lead-out pins of the two groups of main lead-out pin components 603-1 and 603-9 are spaced apart from each other in the circumferential direction of the bottom wall 603-5. In this disposing manner, a solution in which the projections of the plurality of groups of current input paths and the projections of the plurality of groups of current output paths are cross-distributed in rows and columns in the direction from the top surface 601-1 of the PCB to the bottom surface 601-3 of the PCB can be matched, thereby facilitating the wiring of the PCB, improving the utilization of the PCB, and reducing the size of the PCB.

In a possible implementation, a distance between the main lead-out pin component 603-1 and the fifth edge 603-51 is 2 mm to 25 mm, and a distance between the main lead-out pin component 603-9 and the sixth edge 603-53 is 2 mm to 25 mm. In this way, the main lead-out pin component 603-1 and the main lead-out pin component 603-9 may be distributed at an edge of the bottom wall 603-5, to facilitate subsequent assembly with the PCB.

In a possible implementation, the coil lead-out component 603-3 and the auxiliary contact lead-out pin component 603-11(1) are arranged along the seventh edge 603-55. In this way, an area of the bottom wall 603-5 of the relay 603 can be fully used, thereby reducing the size of the relay 603, and further reducing the size of the power distribution apparatus 60.

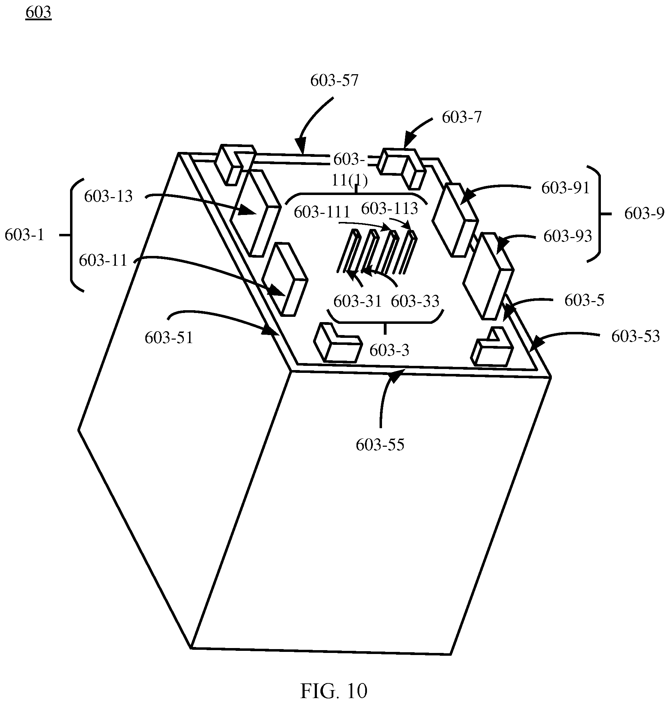

FIG. 10 is a diagram of still another structure of the relay in FIG. 6(a) and FIG. 6(b). Different from FIG. 9, the coil lead-out pin component 603-3 and the auxiliary contact lead-out pin component 603-11(1) may alternatively be disposed in a center of the bottom wall 603-5 of the relay 603. In this way, an area of the bottom wall 603-5 of the relay 603 can also be fully used, and the size of the relay 603 can be reduced.

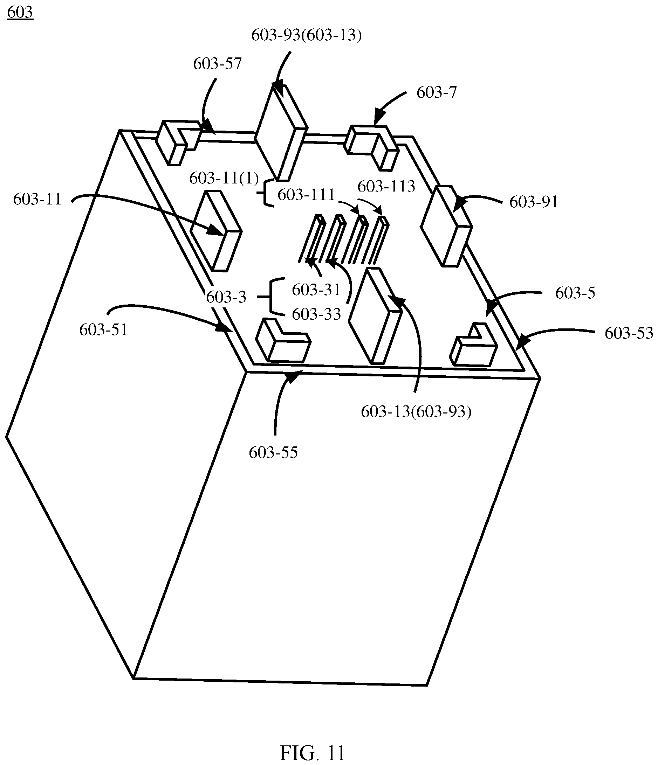

FIG. 11 is a diagram of yet another structure of the relay in FIG. 6(a) and FIG. 6(b). Different from FIG. 10, the two input lead-out pins of the two groups of main lead-out pin components 603-1 and 603-9 are respectively disposed close to the fifth edge 603-51 and the sixth edge 603-53, and the two output lead-out pins of the two groups of main lead-out pin components 603-1 and 603-9 are respectively disposed close to the seventh edge 603-55 and the eighth edge 603-57. In other words, the four lead-out pins of the two groups of main lead-out pin components 603-1 and 603-9 are respectively disposed close to the four edges of the bottom wall 605-53.

In a possible implementation, the input lead-out pin 603-11 of the main lead-out pin component 603-1 is disposed close to the fifth edge 603-51, the input lead-out pin 603-91 of the main lead-out pin component 603-9 is disposed close to the sixth edge 603-53, the output lead-out pin 603-13 of the main lead-out pin component 603-1 is disposed close to the seventh edge 603-55, and the output lead-out pin 603-93 of the main lead-out pin component 603-9 is disposed close to the eighth edge 603-57.

In another possible disposing manner, the input lead-out pin 603-11 of the main lead-out pin component 603-1 is disposed close to the fifth edge 603-51, the input lead-out pin 603-91 of the main lead-out pin component 603-9 is disposed close to the sixth edge 603-53, the output lead-out pin 603-13 of the main lead-out pin component 603-1 is disposed close to the eighth edge 603-57, and the output lead-out pin 603-93 of the main lead-out pin component 603-9 is disposed close to the seventh edge 603-55.

In other words, in this embodiment of this application, the two output lead-out pins and the two input lead-out pins only need to be respectively disposed along the four edges in the circumferential direction of the bottom wall 603-5, and the output lead-out pins and the input lead-out pins are spaced apart from each other in the circumferential direction of the bottom wall 603-5. In this disposing manner, a solution in which the projections of the plurality of groups of current input paths and the projections of the plurality of groups of current output paths are cross-distributed in rows and columns in the direction from the top surface 601-1 of the PCB to the bottom surface 601-3 of the PCB can be matched, thereby facilitating the wiring of the PCB, improving the utilization of the PCB, and reducing the size of the PCB.

With reference to FIG. 9 to FIG. 11, when the relay 603 works, voltages on the two groups of main lead-out pin components 603-1 and 603-9 are far greater than voltages on the coil lead-out pin component 603-3 and the auxiliary contact lead-out pin component 603-11. To meet a safety regulation requirement between a high-voltage pin and a low-voltage pin, in a possible implementation, a distance between the main lead-out pin component 603-1 and the coil lead-out pin component 603-3 and a distance between the main lead-out pin component 603-1 and the auxiliary contact lead-out pin component 603-11(1) are both 10 mm to 60 mm. Similarly, a distance between the main lead-out pin component 603-9 and the coil lead-out pin component 603-3 and a distance between the main lead-out pin component 603-9 and the auxiliary contact lead-out pin component 603-11(1) are both 10 mm to 60 mm.

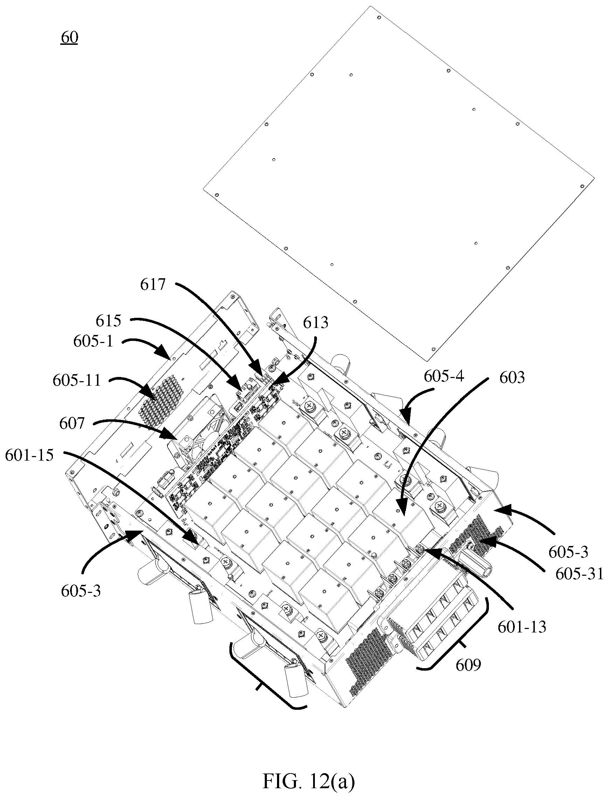

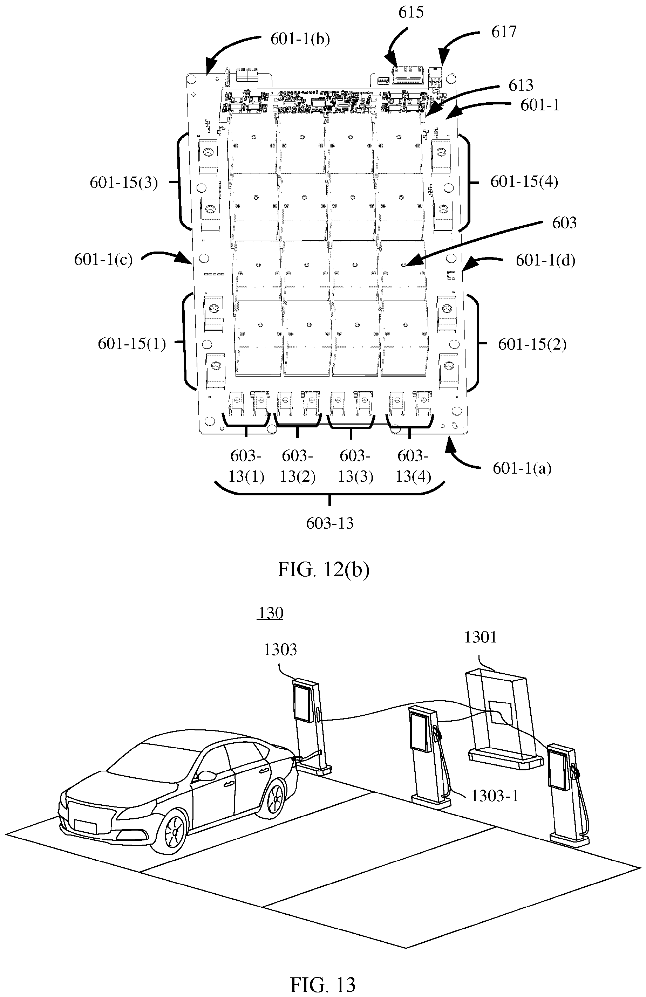

FIG. 12(a) is an exploded view of a structure of the power distribution apparatus in FIG. 6(a) and FIG. 6(b), and FIG. 12(b) is a diagram of a structure of the PCB in FIG. 12(a). It should be noted that, for ease of illustration, FIG. 12(a) and FIG. 12(b) show that the PCB includes four groups of input terminals, four groups of output terminals, four groups of current input paths, and four groups of current output paths. In addition, one relay is connected between each group of current input paths and each group of current output paths. During specific implementation, quantities of input terminals, output terminals, current input paths, and current output paths may be flexibly set. This is not limited in this application.

With reference to FIG. 6(a), FIG. 6(b), and FIG. 12(a), the power distribution apparatus 60 further includes a housing. The PCB and the plurality of relays 603 are located in the housing. The housing includes a first side wall 605-1 and a second side wall 605-3 that are disposed opposite to each other, and a third side wall 605-3 and a fourth side wall 605-4 that are disposed opposite to each other.

In a possible implementation, the first side wall 605-1 includes an air intake vent 605-11, and the second side wall 605-3 includes an air exhaust vent 605-31. In another possible implementation, the air intake vent 605-11 and the air exhaust vent 605-31 may be respectively disposed on the third side wall 605-3 and the fourth side wall 605-4 that are disposed opposite to each other. The air intake vent 605-11 and the air exhaust vent 605-31 are disposed on the housing, so that heat dissipation efficiency of the power distribution apparatus 60 can be improved, thereby further improving a through-current capability of the power distribution apparatus 60.

In a possible implementation, the power distribution apparatus 60 further includes a fan 607. The fan 607 is disposed at the air intake vent 605-11. The fan can accelerate air circulation in the power distribution apparatus 60, and further improve heat dissipation efficiency of the power distribution apparatus 60.

In a possible implementation, in a direction from the air intake vent 605-11 to the air exhaust vent 605-31, a projection of each protrusion 603-7 of the relay 603 does not overlap a projection of each lead-out pin in the two groups of main lead-out pin components 603-1 and 603-9 of the relay 603. In other words, in the direction from the air intake vent 605-11 to the air exhaust vent 605-31, each protrusion 603-7 does not block any lead-out pin in the two groups of main lead-out pin components 603-1 and 603-9 of the relay 603. In this disposing manner, air entering from the air intake vent 605-11 may be in direct contact with each lead-out pin in the two groups of main lead-out pin components 603-1 and 603-9. In this way, each protrusion 603-7 does not affect heat dissipation of any lead-out pin in the two groups of main lead-out pin components 603-1 and 603-9, so that heat dissipation efficiency of the power distribution apparatus 60 can be further improved.

In a possible implementation, in the direction from the air intake vent 605-11 to the air exhaust vent 605-31, each lead-out pin in the two groups of main lead-out pin components 603-11 and 603-91 of the relay 603 includes a first side surface and a second side surface that are disposed opposite to each other, and a third side surface and a fourth side surface that are adjacent to the first side surface and the second side surface. A sum of areas of the first side surface and the second side surface is less than a sum of areas of the third side surface and the fourth side surface. In this manner, after the air enters from the air intake vent 605-11, the air can be in full contact with the third side surface and the fourth side surface, thereby further improving heat dissipation efficiency of the power distribution apparatus 60.

Still with reference to FIG. 12(a), in a possible implementation, the power distribution apparatus 60 further includes a plurality of groups of input ports 609, and the plurality of groups of input ports 609 are connected to the plurality of groups of input terminals 601-13 (for example, 601-13(1), 601-13(2), and the like) in one-to-one correspondence. The plurality of groups of input ports 609 are exposed outside the housing, and are configured to receive an external current, so that the external current can be transmitted to the plurality of groups of input terminals 601-13 (for example, 601-13(1), 601-13(2), and the like).

Similarly, the power distribution apparatus 60 further includes a plurality of groups of output ports 611, and the plurality of groups of output ports 611 are connected to the plurality of groups of output terminals 601-15 (for example, 601-15(1), 601-15(2), and the like) in one-to-one correspondence. The plurality of groups of output ports 611 are exposed outside the housing, so that the power distribution apparatus 60 can be connected to an external device.

In a possible implementation, the power distribution apparatus 60 further includes a controller 613. The controller 613 is configured to control the plurality of relays 603 to be closed or opened.

In a possible implementation, the power distribution apparatus 60 further includes an auxiliary power supply terminal 615. The auxiliary power supply terminal 615 is connected to the controller 613 through the wiring of the PCB. The auxiliary power supply terminal 615 is configured to: receive an external low-voltage direct current, transmit the low-voltage direct current to the controller 613, and further supply power to the controller 613.

In a possible implementation, the auxiliary power supply terminal 615 is disposed on the top surface 601-1 of the PCB, the housing is provided with an opening, and the auxiliary power supply terminal 615 is exposed outside the housing through the opening, so that the auxiliary power supply terminal 615 can be connected to an external power supply device.

In a possible implementation, the power distribution apparatus 60 further includes a communication terminal 617, and the communication terminal 617 is connected to the controller 613 by using the PCB. The communication terminal 617 is configured to: receive an external signal, and transmit the external signal to the controller 613, so that the controller 613 controls, based on the external signal, the plurality of relays 603 to be closed or opened.

In a possible implementation, the communication terminal 617 is disposed on the top surface 601-1 of the PCB, the housing is provided with an opening, and the communication terminal 617 is exposed outside the housing through the opening, so that the communication terminal 617 can be connected to an external circuit.

Based on this, an embodiment of this application further provides a charging pile. The charging pile includes the foregoing power distribution apparatus 60, a power conversion apparatus, and a plurality of charging interfaces. The power conversion apparatus is configured to output a direct current to the power distribution apparatus 60, the power distribution apparatus 60 is configured to distribute the direct current to any charging interface, and each charging interface is configured to connect to an electric vehicle.

In a possible implementation, FIG. 13 is a diagram of a charging pile according to an embodiment of this application. A charging pile 130 is a split charging pile. The charging pile 130 includes a charging host 1301 and a plurality of charging terminals 1303. The charging host 1301 includes a power conversion apparatus (not shown in the figure) and the foregoing power distribution apparatus 60 (not shown in the figure). The charging terminal 1303 includes a charging connector 1303-1, the charging connector 1303-1 includes a charging interface, and the charging interface is configured to plug into a charging socket of an electric vehicle. The power conversion apparatus in the charging host 1301 is configured to output a direct current to the power distribution apparatus 60, and the power distribution apparatus 60 is configured to output the direct current to the charging interface.

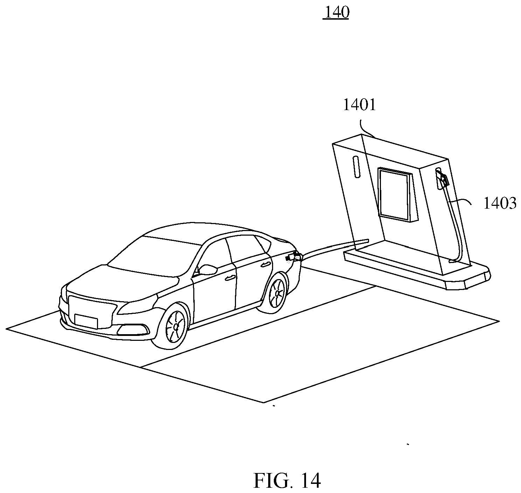

In another possible implementation, FIG. 14 is another diagram of a charging pile according to an embodiment of this application. A charging pile 140 is an integrated charging pile. The charging pile 140 includes a charging host 1401 and a plurality of charging connectors 1403. The charging host 1401 includes a power conversion apparatus (not shown in the figure) and the foregoing power distribution apparatus 60 (not shown in the figure). The charging connector 1403 includes a charging interface, and the charging interface is configured to plug into a charging socket of an electric vehicle. The power conversion apparatus is configured to output a direct current to the power distribution apparatus 60, and the power distribution apparatus 60 is configured to output the direct current to the charging interface.

In a possible implementation, a contactor is further connected between the power distribution apparatus 60 and each charging interface. The contactor is closed only when the charging interface is connected to an electric vehicle and the electric vehicle needs to be charged. When the charging interface is not connected to an electric vehicle or the electric vehicle does not need to be charged, the contactor is in an open state. Therefore, it may be ensured that the charging interface is not energized when the charging interface is not connected to the electric vehicle, thereby improving charging safety of the charging pile.

In a possible implementation, the power conversion apparatus includes a plurality of AC-DC modules. The plurality of AC-DC modules are configured to output direct currents to the power distribution apparatus 60. The power distribution apparatus 60 controls on/off of the plurality of relays 603, to transmit the direct currents to charging interfaces connected to electric vehicles.

In a possible implementation, the power conversion apparatus includes a plurality of AC-DC modules and a plurality of DC-DC modules. Output ends of the plurality of AC-DC modules are connected to input ends of the plurality of DC-DC modules through a direct current bus, and output ends of the plurality of DC-DC modules are configured to output direct currents to the power distribution apparatus 60. The power distribution apparatus 60 controls on/off of the plurality of relays 603, to transmit the direct currents to charging interfaces connected to electric vehicles.

In a possible implementation, after a charging interface is connected to an electric vehicle, the charging pile is configured to obtain charging information of the electric vehicle, for example, a charging voltage and a charging current of the electric vehicle. The charging pile sends a control signal to the power distribution apparatus 60 based on the charging information, and the power distribution apparatus 60 controls, based on the control signal, on/off of the plurality of relays 603, so that the charging interface can output electric energy that matches the charging information of the electric vehicle.

The charging pile provided in this embodiment of this application may have a strong through-current capability and a good heat dissipation capability, so that the charging pile can perform high-power supercharging on the electric vehicle, thereby helping implement a charging speed of one kilometer per second of the charging pile. In other words, this helps the charging pile supplement, in one second, the electric vehicle with electric energy that can enable the electric vehicle to travel one kilometer. In addition, this can also reduce anxiety of a user about slow charging of the charging pile, and bring charging experience of "departure with a full charge over a cup of coffee" to the user. The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A power distribution apparatus, wherein the power distribution apparatus comprises a printed circuit board, PCB and a plurality of relays, the PCB comprises a top surface and a bottom surface that are disposed opposite to each other, the top surface of the PCB or the inside of the PCB comprises a plurality of groups of current input paths, the bottom surface of the PCB comprises a plurality of groups of current output paths, each group of current input paths is configured to receive a current, each group of current output paths is configured to output a current, each group of current input paths comprises two current input paths: a positive current input path and a negative current input path, and each group of current output paths comprises two current output paths: a positive current output path and a negative current output path, wherein
each of the plurality of relays comprises a main lead-out pin component located outside the relay, the main lead-out pin component comprises an input lead-out pin and an output lead-out pin, the input lead-out pin is connected to one of a group of current input paths, the output lead-out pin is connected to one of a group of current output paths, and the main lead-out pin component is configured to: connect or disconnect a current transmission path between the current input path and the current output path; and
output lead-out pins of at least two of the plurality of relays are connected to a same group of current output paths, and input lead-out pins of the at least two relays are connected to at least two groups of current input paths in one-to-one correspondence.

2. The power distribution apparatus according to claim 1, wherein a via is further comprised between the top surface of the PCB and the bottom surface of the PCB, and the main lead-out pin component of each relay is connected to each current input path and each current output path through the via, wherein
the plurality of groups of current output paths comprise a plurality of groups of copper bars or a plurality of groups of aluminum bars; and
a length of each input lead-out pin is less than a length of each output lead-out pin.

3. The power distribution apparatus according to claim 1 or 2, wherein each relay comprises two groups of main lead-out pin components, and the two groups of main lead-out pin components are connected between one group of current input paths and one group of current output paths, wherein
input lead-out pins of one group of main lead-out pin components are connected to a positive current input path of the one group of current input paths through the via, and output lead-out pins of the one group of main lead-out pin components are connected to a positive current output path of the one group of current output paths through the via; and
input lead-out pins of the other group of main lead-out pin components are connected to a negative current input path of the one group of current input paths through the via, and output lead-out pins of the other group of main lead-out pin components are connected to a negative current output path of the one group of current output paths through the via.

4. The power distribution apparatus according to claim 3, wherein the PCB comprises a plurality of groups of input terminals and a plurality of groups of output terminals, the plurality of groups of input terminals are connected to the plurality of groups of current input paths in one-to-one correspondence, the plurality of groups of output terminals are connected to the plurality of groups of current output paths in one-to-one correspondence, each group of current input paths is configured to receive the current by using a corresponding group of input terminals, and each group of current output paths is configured to output the current by using a corresponding group of output terminals, wherein
the PCB comprises a first edge and a second edge that are disposed opposite to each other, and a third edge and a fourth edge that are disposed opposite to each other; and
the plurality of groups of input terminals are arranged along at least one of the first edge and the second edge, and the plurality of groups of current input paths extend in a direction from the first edge to the second edge.

5. The power distribution apparatus according to claim 4, wherein the plurality of groups of output terminals are arranged along at least one of the third edge and the fourth edge, and the plurality of groups of current output paths extend in a direction from the third edge to the fourth edge.

6. The power distribution apparatus according to claim 5, wherein the relay comprises a bottom wall, the bottom wall is in a quadrilateral shape, the two groups of main lead-out pin components are located on the bottom wall, and the input lead-out pins and the output lead-out pins of the two groups of main lead-out pin components are arranged at intervals in a circumferential direction of the bottom wall, wherein
projections of the two input lead-out pins of the two groups of main lead-out pin components do not overlap in the direction from the first edge to the second edge.

7. The power distribution apparatus according to claim 6, wherein projections of the two output lead-out pins of the two groups of main lead-out pin components do not overlap in the direction from the third edge to the fourth edge.

8. The power distribution apparatus according to any one of claims 1 to 7, wherein the relay comprises at least one protrusion, and the at least one protrusion abuts between the relay and the top surface of the PCB.

9. The power distribution apparatus according to claim 8, wherein the power distribution apparatus further comprises a housing, the PCB and the plurality of relays are located in the housing, the housing comprises two side walls that are disposed opposite to each other, one of the two side walls comprises an air intake vent, and the other of the two side walls comprises an air exhaust vent.

10. The power distribution apparatus according to claim 9, wherein in a direction from the air intake vent to the air exhaust vent, a projection of each of the at least one protrusion does not overlap a projection of each lead-out pin in the two groups of main lead-out pin components.

11. The power distribution apparatus according to claim 10, wherein in the direction from the air intake vent to the air exhaust vent, each lead-out pin in each group of main lead-out pin components comprises a first side surface and a second side surface that are disposed opposite to each other, and a third side surface and a fourth side surface that are adjacent to the first side surface and the second side surface, wherein
a sum of areas of the first side surface and the second side surface is less than a sum of areas of the third side surface and the fourth side surface.

12. The power distribution apparatus according to any one of claims 3 to 9, wherein each relay further comprises two groups of main contact components and a coil, the two groups of main contact components are connected to the two groups of main lead-out pin components in one-to-one correspondence, each group of main contact components comprises a movable contact and a stationary contact, one of the movable contact and the stationary contact is connected to the input lead-out pin, and the other of the movable contact and the stationary contact is connected to the output lead-out pin; and
the coil is configured to drive the movable contact and the stationary contact of each of the two groups of main contact components to act with each other.

13. The power distribution apparatus according to claim 12, wherein each relay further comprises a group of auxiliary contact components and a group of auxiliary contact lead-out pin components, the group of auxiliary contact components is located inside the relay, the group of auxiliary contact lead-out pin components is located outside the relay, and the group of auxiliary contact lead-out pin components is connected to the group of auxiliary contact components, wherein
the group of auxiliary contact components comprises an auxiliary movable contact and an auxiliary stationary contact, and the auxiliary contact components are mechanically linked with each group of main contact components.

14. The power distribution apparatus according to claim 13, wherein when a movable contact and a stationary contact that are connected to at least one of the two groups of main lead-out pin components change from an open state to a closed state, a state between the auxiliary movable contact and the auxiliary stationary contact changes; or
when a movable contact and a stationary contact that are connected to each of the two groups of main lead-out pin components change from a closed state to an open state, a state between the auxiliary movable contact and the auxiliary stationary contact changes.

15. A charging pile, wherein the charging pile comprises the power distribution apparatus according to any one of claims 1 to 14, a power conversion apparatus, and a plurality of charging interfaces, wherein each charging interface is configured to connect to an electric vehicle; and
the power conversion apparatus is configured to output a direct current to the power distribution apparatus, and the power distribution apparatus is configured to distribute the direct current to any charging interface.
